# EUROPÄISCHE PATENTANMELDUNG

(11) **EP 0 833 272 A2**
(43) Veröffentlichungstag der Anmeldung: **01.04.1998**
(21) Anmeldenummer: 97115285.5
(22) Anmeldetag: 03.09.1997
(51) Int. Cl.: G06K 7/10

(54) **Kartenlesevorrichtung**

(30) Priorität: 20.09.1996 DE 19638646
(71) Anmelder: SIEMENS AKTIENGESELLSCHAFT, 80333 München (DE)
(72) Erfinder: Hoolhorst, Albert, 4527 BE Aardenburg (NL)

(57) **Zusammenfassung**

Es wird eine Kartenlesevorrichtung mit Kontaktelementen (12) zum Kontaktieren von insbesondere auf einer einen Chip enthaltenden Karte (3) vorgesehenen Kontaktflächen beschrieben. Die beschriebene Kartenlesevorrichtung zeichnet sich dadurch aus, daß ein Kontaktelementestellungsveränderungselement (13) vorgesehen ist, welches derart angeordnet und ausgebildet ist, daß durch dieses während des Einbringens der jeweils zu lesenden Karte in deren Lesestellung und/oder während des Entfernens der Karte aus deren Lesestellung die Kontaktelemente aus einer zur Kontaktierung der Karte geeigneten Stellung in eine davon entfernte, zur Kontaktierung der Karte ungeeignete Nicht-Kontaktstellung bewegbar sind.

## Beschreibung

Die vorliegende Erfindung betrifft eine Kartenlesevorrichtung gemäß dem Oberbegriff des Patentanspruchs 1, d.h. eine Kartenlesevorrichtung mit Kontaktelementen zum Kontaktieren von insbesondere auf einer einen Chip enthaltenden Karte vorgesehenen Kontaktflächen.

Derartige Kartenlesevorrichtungen sind beispielsweise die in Mobiltelefonen verwendeten Lesevorrichtungen zum Entgegennehmen und/oder Weitergeben von durch eine oder für eine sogenannte SIM-Karte bzw. ein sogenanntes SIM-Modul bereitgestellten Informationen.

Die besagten SIM-Module werden in Mobiltelefonen vor allem zur Teilnehmeridentifizierung eingesetzt; "SIM" ist die Abkürzung für "Subscriber Identity Module". SIM-Module sind insbesondere aufgrund ihrer geringen Abmessungen (25 x 15 mm) sehr gut für den Einsatz in Mobiltelefonen geeignet.

Kartenlesevorrichtungen der im Patentanspruch 1 beanspruchten Art können jedoch auch Kartenlesevorrichtungen zum Lesen der "normalen" Chipkarten sein.

Die in Kartenlesevorrichtungen verwendbaren SIM-Module, "normalen" Chipkarten etc. sind allesamt Chips enthaltende Karten bzw. Chipkarten und werden im folgenden der Einfachheit halber kurz als Karten bezeichnet; der Vorgang des Entgegennehmens und/oder des Weitergebens von durch eine oder für eine Karte bereitgestellten Informationen wird nachfolgend der Einfachheit halber als Lesen der Karte bezeichnet.

Unabhängig von der Art der durch die jeweiligen Kartenlesevorrichtungen zu lesenden Karten stellt sich bei den bekannten Kartenlesevorrichtungen mit zunehmender Nutzungsdauer bisweilen eine Abnahme der Zuverlässigkeit beim Lesen der Karte(n) ein. Dies gilt insbesondere, aber nicht ausschließlich für diejenigen Kartenlesevorrichtungen, bei denen die Karte zum Lesen in einen Schacht eingeführt werden muß.

Der vorliegenden Erfindung liegt daher die Aufgabe zugrunde, die Kartenlesevorrichtung gemäß dem Oberbegriff des Patentanspruchs 1 derart weiterzubilden, daß das Lesen der jeweilige(n) Karte(n) dauerhaft, d.h. weitestgehend unabhängig von der Nutzungsdauer zuverlässig fehlerfrei durchführbar ist.

Diese Aufgabe wird erfindungsgemäß durch die im kennzeichnenden Teil des Patentanspruchs 1 beanspruchten Merkmale gelöst.

Demnach ist ein Kontaktelementestellungsveränderungselement vorgesehen, welches derart angeordnet und ausgebildet ist, daß durch dieses während des Einbringens der jeweils zu lesenden Karte in deren Lesestellung und/oder während des Entfernens der Karte aus deren Lesestellung die Kontaktelemente aus einer zur Kontaktierung der Karte geeigneten Stellung in eine davon entfernte, zur Kontaktierung der Karte ungeeignete Nicht-Kontaktstellung bewegbar sind.

Dadurch kann erreicht werden, daß die Kontaktelemente der Kartenlesevorrichtung dann und nur dann mit der zu lesenden Karte in Kontakt kommen (können), wenn sich diese bereits in deren bestimmungsgemäßer Lesestellung befindet; ein Schleifen der Kontaktelemente an der Kartenoberfläche oder an anderen Gegenständen während des Einbringens der Karte in deren Lesestellung und/oder während des Entfernens der Karte aus deren Lesestellung ist dadurch ausgeschlossen. Dies wiederum hat erkennbar den positiven Effekt, daß eine Beschädigung und/oder eine Abnutzung der Kontaktelemente durch ein häufiges und/oder ungeschicktes Einbringen der Karte in deren Lesestellung ausgeschlossen ist. Die Gefahr einer Beschädigung und/oder Abnutzung der Kontaktelemente kann dadurch auf ein Minimum reduziert werden.

Der aus diesem Grund im wesentlichen gleichbleibend gute Zustand der Kontaktelemente wirkt sich positiv auf die Zuverlässigkeit beim Lesen der jeweilige(n) Karte(n) aus; sie (die Zuverlässigkeit) ist konstant hoch.

Es wurde also eine Kartenlesevorrichtung gefunden, durch welche das Lesen der jeweilige(n) Karte(n) dauerhaft, d.h. weitestgehend unabhängig von der Nutzungsdauer zuverlässig fehlerfrei durchführbar ist.

Das Abrücken der Kontaktelemente von der Kartenoberfläche während des Einbringens und/oder Entfernens der Karte in deren bzw. aus deren Lesestellung hat ferner den positiven Effekt, daß die Kontaktelemente während dieser Vorgänge durch die darüber hinweg laufenden Kontaktflächen (Oberflächenkontakte) der Karte nicht kurzgeschlossen werden können, wodurch auf das Vorsehen separater Maßnahmen zur Vermeidung dessen verzichtet werden kann.

Vorteilhafte Weiterbildungen der Erfindung sind Gegenstand der Unteransprüche.

Die Erfindung wird nachfolgend anhand eines Ausführungsbeispiels unter Bezugnahme auf die Zeichnung näher erläutert.
Es zeigen
- Figur 1A: eine Draufsicht auf ein Kontaktträgerteil einer erfindungsgemäß ausgebildeten Kartenlesevorrichtung,
- Figur 1B: eine Schnittdarstellung des in der Figur 1A gezeigten Kontaktträgerteils (Schnitt längs einer in der Figur 1A gezeigten Linie A-A),
- Figur 1C: eine Seitenansicht des in den Figuren 1A und 1B gezeigten Kontaktträgerteils,
- Figur 2A: eine Draufsicht auf ein Kartenträgerteil der erfindungsgemäß ausgebildeten Kartenlesevorrichtung,
- Figur 2B: eine Schnittdarstellung des in der Figur 2A gezeigten Kartenträgerteils (Schnitt längs einer in der Figur 2A gezeigten Linie B-B),
- Figur 2C: eine Schnittdarstellung des in den Figuren 2A und 2B gezeigten Kartenträgerteils (Schnitt längs einer in der Figur 2B gezeigten Linie C-C),
- Figur 3A: den Zustand, in welchem das (kartenlose) Kartenträgerteil gemäß Figur 2 gerade in das Kontaktträgerteil gemäß Figur 1 eingeschoben wird,
- Figur 3B: den Zustand, in welchem das (kartenlose) Kartenträgerteil gemäß Figur 2 seine Endstellung im Kontaktträgerteil gemäß Figur 1 erreicht hat, und
- Figur 3C: den Zustand, in welchem das mit einer Karte bestückte Kartenträgerteil gemäß Figur 2 seine Endstellung im Kontaktträgerteil gemäß Figur 1 erreicht hat.

Die im folgenden beschriebene Kartenlesevorrichtung ist eine zum Lesen von SIM-Modulen ausgelegte Kartenlesevorrichtung. Dies bedeutet jedoch nicht, daß die Erfindung auf hierfür ausgelegte Kartenlesevorrichtungen beschränkt ist; die Erfindung ist auch bei Kartenlesevorrichtungen einsetzbar, die zum Lesen beliebiger anderer Karten (Chipkarten) ausgelegt sind.

Die beschriebene Kartenlesevorrichtung besteht im betrachteten Beispiel aus einem Kontaktträgerteil und einem Kartenträgerteil; die durch die Kartenlesevorrichtung zu lesende Karte wird in das Kartenträgerteil eingesetzt und zusammen mit diesem in das Kontaktträgerteil eingeschoben. Allerdings besteht auch auf diesen Aufbau keine Einschränkung. Grundsätzlich könnte die zu lesende Karte auch direkt, d.h. ohne ein Kartenträgerteil eingeschoben werden.

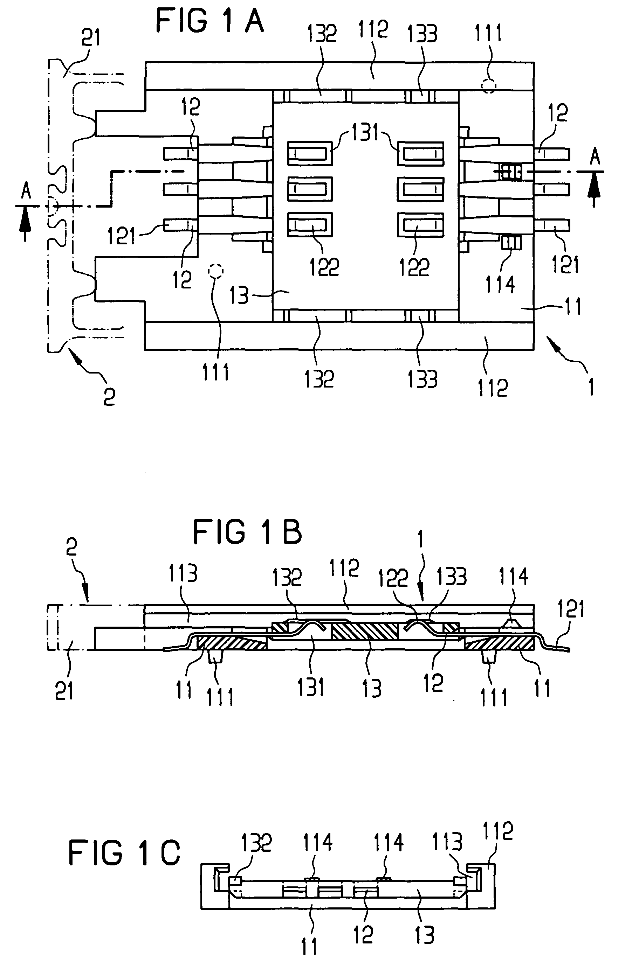

Das genannte Kontaktträgerteil ist in den Figuren 1A, 1B und 1C gezeigt; es ist dort mit dem Bezugszeichen 1 bezeichnet.

Das Kontaktträgerteil 1 besteht aus einem Isolierkörper 11, sechs Kontaktelementen in Form von Kontaktfedern 12 und einem Kontaktelementestellungsveränderungselement in Form einer Platte 13.

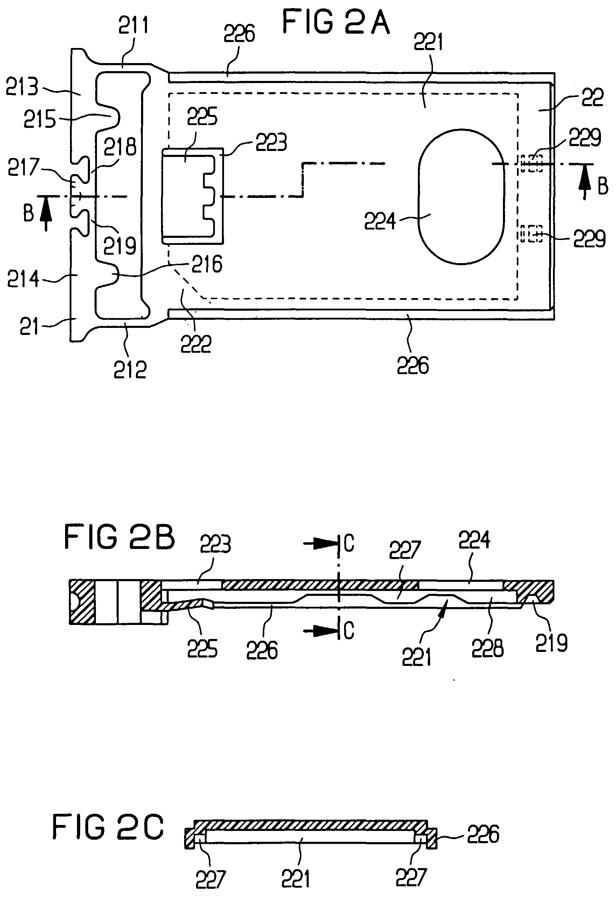

In den Figuren 1A und 1B sind durch gestrichelte Linien auch Teile des später insbesondere unter Bezugnahme auf Figur 2 näher beschriebenen Kartentragerteils 2 im in das Kontaktträgerteil 1 eingeschobenen Zustand dargestellt.

Das Kontaktträgerteil 1, genauer gesagt der Isolierkörper 11 und die Kontaktfedern 12 desselben sind zur Montage auf einer (in den Figuren nicht gezeigten) elektrischen Leiterplatte ausgelegt. Der Isolierkörper 11 weist zu diesem Zweck, wie insbesondere aus den Figuren 1A und 1B ersichtlich ist, Montagezapfen 111 auf, welche in entsprechende Ausnehmungen in der elektrischen Leiterplatte einsteckbar und bei Bedarf dort auch befestigbar sind; die Kontaktfedern 12 sind an jeweils einem ihrer Enden als Lötfahnen 121 ausgebildet, welche beispielsweise unter Verwendung eines SMT-Lötverfahrens mit der Leiterplatte verlötbar sind.

Der Isolierkörper 11 ist derjenige Bestandteil des Kontaktträgerteils 1, der dieses, genauer gesagt dessen weitere Bestandteile zusammenhält und ein bestimmungsgemäßes Zusammenwirken derselben mit dem Kartenträgerteil 2 ermöglicht.

Die letztgenannte Funktion des Isolierkörpers 11 kann dieser insbesondere durch Vorsehen nutenartiger Aussparungen 113 in erhöhten Randabschnitten 112 an einander gegenüberliegenden Seiten des Isolierkörpers 11 erfüllen; die (einander zugewandten) nutenartigen Aussparungen 113 können, wie insbesondere aus der Figur 1C ersichtlich ist, als Führung für das mit dem Kontaktträgerteil 1 (durch ein Übereinander- bzw. ein Ineinanderschieben) in Eingriff zu bringende, später noch genauer beschriebene Kartenträgerteil 2 dienen. Die Richtung, längs welcher das Kartenträgerteil 2 relativ zum Kontaktträgerteil 1 bewegt werden muß, um in dieses eingeschoben zu werden, ist bei den Darstellungen gemäß den Figuren 1A und 1B die horizontal nach rechts verlaufende Richtung und bei der Darstellung gemäß der Figur 1C die frontal in die Zeichnungsebene hinein verlaufende Richtung.

Die Kontaktfedern 12 weisen jeweils einen kuppenartig ausgebildeten, elastisch verformbaren (bewegbaren) Endabschnitt 122 auf. Dieser Endabschnitt 122 ist jeweils derjenige Teil der Kontaktfedern 12, mit welchem diese mit den Kontaktflächen (Oberflächenkontakten) der zu lesenden Karte(n) in Kontakt kommen.

Wie insbesondere aus der Figur 1A ersichtlich ist, sind die Kontaktfedern 12 teilweise durch die Platte 13 bedeckt. Die Platte 13 weist Aussparungen 131 auf, durch welche die Endabschnitte 122 der Kontaktfedern 12 hindurchragen können.

Die Aussparungen 131 sind derart positioniert, daß die Endabschnitte 122 der Kontaktfedern genau mit den Kontaktflächen der zu lesenden Karte zusammentreffen, wenn sich diese innerhalb der Kartenlesevorrichtung in ihrer Lesestellung befindet. Im betrachteten Beispiel sind, da die zu lesende Karte ein SIM-Modul ist, insgesamt sechs Kontaktfedern 12 vorgesehen, die in zwei, jeweils drei Kontaktfedern 12 umfassenden Reihen angeordnet sind.

Die Platte 13 weist an ihren den erhöhten Randabschnitten 112 des Isolierkörpers 11 zugewandten Seiten jeweils Erhebungen 132 und 133 auf, welche sich im wesentlichen parallel zu den erhöhten Randabschnitten 112 in geringem Abstand zu diesen erstrecken und, wie insbesondere aus den Figuren 1B und 1C ersichtlich ist, teilweise die in den Randabschnitten 112 vorgesehenen nutenartigen Aussparungen 113 bedecken.

Die Erhebungen 132 und 133 der Platte 13 stehen beim Einschieben des Kartenträgerteils 2 in die nutenartigen Aussparungen 113 des Kontaktträgerteils 1 hindernd im Weg. Die Platte 13 kann jedoch, wie noch genauer beschrieben werden wird, durch das Kartenträgerteil 2 zur Leiterplatte hin aus dem Weg gedrückt werden. Dies hat zweierlei Auswirkungen: Zum einen kann das Kartenträgerteil 2 danach im wesentlichen ungehindert in das Kontaktträgerteil 1 eingeschoben werden, und zum anderen werden durch das Wegdrücken der Platte 13 nicht nur diese selbst, sondern auch die Kontaktfedern 12 (insbesondere deren Endabschnitte 122) weggedrückt.

Das Wegdrücken der Kontaktfedern 12 wird durch das Wegdrücken der Platte 13 bewirkt; die Kontaktfedern 12, genauer gesagt insbesondere deren Endabschnitte 122 werden von der Platte 13 mitgenommen.

Das Wegdrücken der Platte 13 durch das Kartenträgerteil 2 wird durch Erhebungen des Kartenträgerteils 2 bewirkt, welche beim Einschieben des Kartenträgerteils 2 in das Kontaktträgerteil 1 über die Erhebungen 132 und 133 der Platte 13 unter Wegdrücken derselben hinweglaufen. Damit die Erhebungen des Kartenträgerteils 2, welche sich von Haus aus auf der selben Höhe wie die Erhebungen 132 und 133 der Platte 13 befinden, widerstandsarm über diese hinweglaufen können, weisen die Erhebungen 132 und 133, wie insbesondere aus der Figur 1B ersichtlich ist, an ihren vorderen und hinteren Enden Auflaufschrägen auf.

Im vollständig in das Kontaktträgerteil 1 eingeschobenen Zustand des Kartenträgerteils 2 befindet sich eine im Kartenträgerteil 2 aufgenommene (zu lesende) Karte automatisch in ihrer Lesestellung. In diesem Zustand haben die Erhebungen des Kartenträgerteils 2 die Erhebungen 132, 133 des Kontaktträgerteils 1 so weit überquert, daß das aktive Wegdrücken der Platte 13 durch das Kartenträgerteil 2 beendet ist. Die Platte 13 wird durch die Federkraft der Kontaktfedern 12 in Richtung ihrer ursprünglichen Stellung zurückgedrückt, und zwar so weit, bis diese, genauer gesagt deren kuppenartige Endabschnitte 122 die zu lesende Karte (deren Kontaktflächen) erreichen und dadurch kontaktieren.

Damit das Kartenträgerteil 2 nicht einfach aus dem Kontaktträgerteil 1 herausfallen kann, weist das Kontaktträgerteil 2, genauer gesagt der Isolierkörper 11 desselben ein oder mehrere Rastelemente in Form von Rastnasen 114 auf, welche im vollständig in das Kontaktträgerteil 1 eingeschobenen Zustand des Kartenträgerteils 2 mit zugeordneten Rastelementen (Rastvertiefungen) des Kartenträgerteils 2 verrasten.

Das zuvor bereits mehrfach erwähnte Kartenträgerteil 2 ist in den Figuren 2A, 2B und 2C detailliert dargestellt und dort mit dem Bezugszeichen 2 bezeichnet.

Das Kartenträgerteil 2 ist einstückig ausgebildet; es weist einen Entriegelungsabschnitt 21 und einen Kartenaufnahmeabschnitt 22 auf.

Der Kartenaufnahmeabschnitt 22 weist, wie insbesondere aus der Figur 2A ersichtlich ist, eine dort durch gestrichelte Linien dargestellte, als Kartenauflagefläche dienende wannenartige Vertiefung 221 auf, in welche die zu lesende Karte einsetzbar ist. Die wannenartige Vertiefung 221 ist an die Form der zu lesenden Karte angepaßt; sie weist wie die bei der betrachteten Kartenlesevorrichtung als Karten zu verwendenden SIM-Module eine sogenannte Codierungsschräge 222 auf, durch welche ein falsch orientiertes Einlegen des SIM-Moduls in die wannenartige Vertiefung 221 verhindert werden soll.

Die wannenartige Vertiefung 221 weist, wie insbesondere aus den Figuren 2A und 2B ersichtlich ist, in ihrem Boden Öffnungen 223 und 224 auf, welche es ermöglichen, eine in die wannenartige Vertiefung 221 eingesetzte Karte von jenseits des Bodens aus der wannenartigen Vertiefung 221 herauszudrücken und aus dem Kartenträgerteil 2 zu entnehmen.

Vom Rand der wannenartigen Vertiefung 221 geht ein elastisch verformbar (biegbar) ausgebildetes, zungenartiges Element 225 ab, welches sich zumindest teilweise über die wannenartige Vertiefung 221 hinweg erstreckt.

Zwischen dieses zungenartige Element 225 und dem Boden der wannenartigen Vertiefung 221 muß eine zu lesende Karte eingeschoben werden, wenn sie ordnungsgemäß (bestimmungsgemäß) in das Kartenträgerteil 2 eingesetzt werden soll.

Zum Einstecken der Karte zwischen das zungenartige Element 225 und den Boden der wannenartigen Vertiefung 221 läßt sich das zungenartige Element 225 elastisch nach oben biegen, und im bestimmungsgemäß in die wannenartige Vertiefung 221 eingesetzten Zustand der Karte drückt das zungenartige Element 225 die Karte gegen den Boden der wannenartigen Vertiefung 221.

Wie insbesondere aus der Figur 2C ersichtlich ist, weist der Kartenaufnahmeabschnitt 22 an dessen beim Einschieben des Kartenträgerteils 2 in das Kontaktträgerteil 1 den erhöhten Randabschnitten 112 des Kontaktträgerteils 1 zugewandten Seiten erhöhte Randabschnitte 226 auf.

Die Randabschnitte 226 sind nach außen hin derart gestaltet, daß sie beim Einschieben des Kartenträgerteils 2 in das Kontaktträgerteil 1 in den nutenartigen Aussparungen 113 des Kontaktträgerteils 1 laufen und in diesen geführt werden.

Die nach innen weisenden Bereiche der Randabschnitte sind, wie insbesondere aus den Figuren 2B und 2C ersichtlich ist, mit Erhebungen 227 und 228 versehen, die derart positioniert und gestaltet sind, daß sie beim Einschieben des Kartenträgerteils 2 in das Kontaktträgerteil 1 über die Erhebungen 132 und 133 der Platte 13 des Kontaktträgerteils 1 hinweglaufen und einhergehend damit die Platte 13 zusammen mit den kuppenartigen Endabschnitten 122 der Kontaktfedern 12 des Kontaktträgerteils 1 aus dem Einschubweg drücken. Die Erhebungen 227 und 228 des Kartenträgerteils 1 sind wie die Erhebungen 132 und 133 der Kontaktträgerteils 1 mit Auflaufschrägen versehen.

Die Erhebungen 132 und 133 einerseits und 227 und 228 andererseits sind hinsichtlich der einzelnen Abmessungen, Positionen und Abstände derart aufeinander abgestimmt, daß die Platte 13 und die Kontaktfedern 12 im wesentlichen während des gesamten Einschiebevorganges und nur während dieses Vorganges weggedrückt werden. Sobald das Kartenträgerteil 2 seine bestimmungsgemäße Endposition innerhalb des Kontaktträgerteils 1 erreicht, müssen die Erhebungen 132 und 133 des Kontaktträgerteils 1 und die Erhebungen 227 und 228 der Kartenträgerteils 2 vollständig oder zumindest so weit übereinander hinweggelaufen sein, daß die Platte 13 des Kontaktträgerteils 1 durch die Kontaktfedern 12 wieder in Richtung deren Ausgangsstellung gedrückt wird.

Die Stellung, in die sich die Kontaktfedern 12 nach der Beendigung des Wegdrückens bewegen können, ist deren im wesentlichen entspannte Ausgangsstellung (falls das Kartenträgerteil 2 keine Karte enthält) oder deren Kontaktstellung, in welcher sie die Kontaktflächen einer im Kartenträgerteil enthaltenen Karte kontaktieren; die Stellung, welche die Kontaktfedern im durch das Kartenträgerteil weggedrückten Zustand einnehmen, ist eine zur Kontaktierung der zu lesenden Karte ungeeignete Nicht-Kontaktstellung.

Das Kartenträgerteil 2, genauer gesagt dessen Kartenaufnahmeabschnitt 22 weist an dessen bezüglich der Einschubrichtung vorderen Ende ein oder mehrere Rastelemente in Form von Rastvertiefungen 229 auf, welche im in das Kontaktträgerteil 1 eingeschobenen Zustand des Kartenträgerteils 2 mit den Rastnasen 114 des Kontaktträgerteils 1 verrasten und dadurch ein unbeabsichtigtes Entfernen des Kartenträgerteils 2 aus dem Kontaktträgerteil 1 verhindern.

Das Lösen dieser Rastverbindung ist mit Hilfe des zuvor bereits erwähnten Entriegelungsabschnittes 21 des Kartenträgerteils 2 bewerkstelligbar.

Der Entriegelungsabschnitt 21 ist durch zwei elastisch verformbare (biegbare) Verbindungselemente 211 und 212 mit dem Kartenaufnahmeabschnitt 22 verbunden. Außer den Verbindungselementen 211 und 212 weist der Entriegelungsabschnitt 21 noch zwei nebeneinander angeordnete Kipphebel 213 und 214 und einen zwischen diesen vorgesehenen Kipphebelbetätigungsabschnitt auf; die Verbindungselemente 211 und 212 sind mit den voneinander abgewandten Armen der Kipphebel 213 und 214 verbunden.

Die Kipphebel 213 und 214 weisen Abstützelemente 215 bzw. 216 auf, welche im in das Kontaktträgerteil 1 eingeschobenen Zustand des Kartenträgerteils 2 an das Kontaktträgerteil anschlagen.

Der Kipphebelbetätigungsabschnitt besteht aus einem Druckkraftansatzabschnitt 217 und zwei elastisch verformbaren (biegbaren) Verbindungselementen 218 und 219; die Verbindungselemente 218 bzw. 219 verbinden den Druckkraftansatzabschnitt 217 mit den einander zugewandten Armen der Kipphebel 213 bzw. 214.

Die Betätigung dieses Mechanismus erfolgt dadurch, daß auf den (von außen zugänglichen) Druckkraftansatzabschnitt 217 eine Druckkraft ausgeübt wird. Dies kann beispielsweise durch Eindrücken eines Kugelschreibers oder dergleichen in eine im Druckkraftansatzabschnitt 217 vorgesehene Vertiefung bewerkstelligt werden.

Beim Ausüben einer Druckkraft auf den Druckkraftansatzabschnitt 217 wird dieser in Richtung der wirkenden Druckkraft verschoben. Die elastisch biegbaren Verbindungselemente 218 und 219 folgen der Bewegung des Druckkraftansatzabschnittes 217 und ziehen dabei an den Armen der Kipphebel 213 und 214, mit welchen sie verbunden sind. Das Ziehen an den einander zugewandten Armen der Kipphebel bewirkt, daß diese sich um die am Kontaktträgerteil 1 anschlagenden Abstützelemente 215 und 216 in einander entgegengesetzte Richtungen drehen (schwenken). Dies wiederum hat zur Folge, daß auf die Verbindungselemente 211 und 212, welche die voneinander abgewandten Arme der Kipphebel 213 und 214 mit dem Kartenaufnahmeabschnitt 22 verbinden, eine Zugkraft wirkt. Diese auf die Verbindungselemente 211 und 212 wirkende Zugkraft hat zur Folge, daß diese am Kartenaufnahmeabschnitt 22 des Kartenträgerteils 2 ziehen. Durch das Ziehen am Kartenaufnahmeabschnitt 22 kommen die ursprünglich miteinander verrasteten Rastelemente 114 und 229 außer Eingriff, und mehr oder weniger gleichzeitig gelangen die Erhebungen 227 und 228 des Kartenträgerteils 2 über die Erhebungen 132 und 133 der Platte 13 des Kontaktträgerteils 1. Im Ergebnis wird das Kartenträgerteil 2 (dessen Kartenaufnahmeabschnitt 22) dadurch unter Wegdrücken der Platte 13 ein Stück aus dem Kontaktträgerteil 1 herausgezogen.

Nimmt man die auf den Druckkraftansatzabschnitt 217 ausgeübte Druckkraft zurück, so entspannt sich der elastisch deformierte Entriegelungsabschnitt 21, und das gesamte Kartenträgerteil 2 steht nun so weit aus dem die beschriebene Kartenlesevorrichtung enthaltenden Gerät heraus, daß es durch Greifen des herausstehenden Teils, d.h. durch Greifen des Entriegelungsabschnittes 21 manuell vollständig aus dem Kontaktträgerteil 1 herausgezogen werden kann.

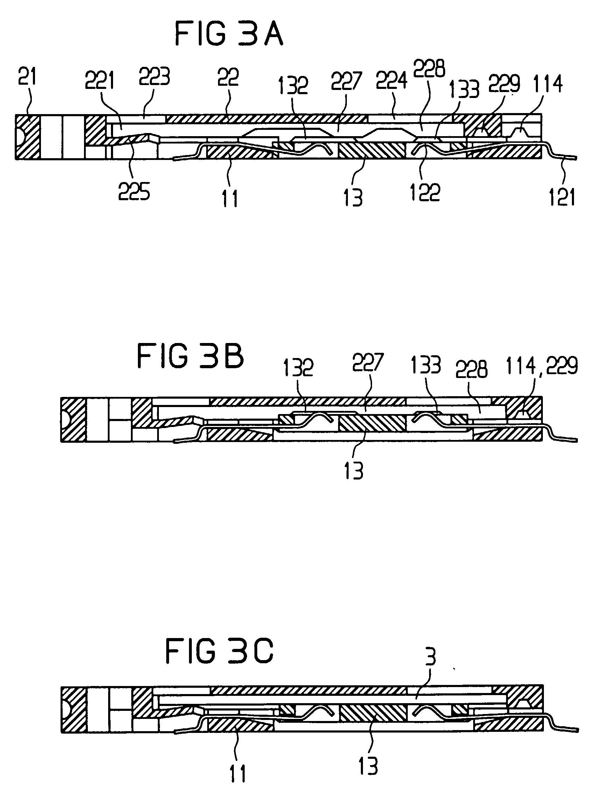

Zur Veranschaulichung insbesondere der Funktion und Wirkungsweise der zuvor bereits erwähnten Erhebungen 132, 133, 227 und 228 wird abschließend unter Bezugnahme auf die Figuren 3A, 3B und 3C das Einführen des Kartenträgerteils 2 in das Kontaktträgerteil 1 im Detail erläutert.

In der Figur 3A ist der Zustand dargestellt, in welchem das Kartenträgerteil 2 teilweise in das Kontaktträgerteil 1 eingeschoben ist. In diesem Stadium sind die Erhebungen 227 und 228 des Kartenträgerteils 2 bereits auf die Erhebungen 132 und 133 des Kontaktträgerteils 1 gelaufen und drücken diese zusammen mit der Platte 13 und den Kontaktfedern 12 von sich weg. Die Kontaktfedern 12, genauer gesagt deren zur Kontaktierung der zu lesenden Karte vorgesehenen kuppenartigen Endabschnitte 122 befinden sich in einer zur Kontaktierung der zu lesenden Karte ungeeigneten Nicht-Kontaktstellung; dies ist besonders bei einem Vergleich dieser Stellung mit den Stellungen der Kontaktfedern 12 in den Figuren 3B (mehr oder weniger entspannte Ausgangsstellung) und 3C (Kontaktstellung) ersichtlich.

In der in der Figur 3A gezeigten Nicht-Kontaktstellung der Kontaktfedern 12 sind deren kuppenartige Endabschnitte 122 relativ weit entfernt von der in der Figur 3C gezeigten Kontaktstellung derselben und können dadurch nicht mit der Oberfläche einer im Kartenträgerteil 2 vorhandenen Karte in Berührung kommen. Das Einführen einer zu lesenden Karte in die Kartenlesevorrichtung kann daher ohne ein Schleifen der Kontaktfedern 12, genauer gesagt deren kuppenartiger Endabschnitte 122 an der Kartenoberfläche erfolgen. Die kuppenartigen Endabschnitte 122 sind daher während des Einführens der Karte keinen abnutzenden, beschädigenden oder zerstörenden Einflüssen ausgesetzt. Insbesondere können sie nicht durch Zerkratzen oder Abrieb in Mitleidenschaft gezogen werden.

Bei fortgesetztem Einschieben des (kartenlosen) Kartenträgerteils 2 gelangt dieses in die in der Figur 3B gezeigte verrastete Endstellung innerhalb des Kontaktträgerteils 1. In dieser Endstellung sind die Erhebungen 132, 133, 227 und 228 nicht mehr übereinander, sondern nebeneinander (zwischeneinander) angeordnet; die Erhebungen 132 und 133 des Kontaktträgerteils 1 befinden sich dabei in benachbart zu den Erhebungen 227 und 228 und/oder zwischen den Erhebungen 227 und 228 des Kartenträgerteils vorhandenen Freiräumen, und die Erhebungen 227 und 228 des Kartenträgerteils 2 befinden sich in benachbart zu den Erhebungen 132 und 133 und/oder zwischen den Erhebungen 132 und 133 des Kontaktträgerteils 1 vorhandenen Freiräumen. Im nicht mehr übereinander liegenden Zustand der jeweiligen Erhebungen 132, 133, 227 und 228 werden die Platte 13 und die Kontaktfedern 12 nicht mehr in die in der Figur 3A gezeigte Nicht-Kontaktstellung gedrückt. Sie sind vielmehr frei beweglich und werden insbesondere durch das Kartenträgerteil 2 nicht mehr daran gehindert, eine andere als die in der Figur 3A gezeigte niedergedrückte Stellung einzunehmen. Die in der Figur 3B gezeigte Stellung der Kontaktfedern 12 ist deren Ausgangsstellung, in welcher sie (die Kontaktfedern) mehr oder weniger entspannt und grundsätzlich in der Lage sind, mit einer in das Kartenträgerteil 2 eingesetzten Karte in Kontakt zu kommen.

Der Zustand, in welchem sich die Kontaktfedern in Kontakt mit einer zu lesenden Karte befinden, ist in der Figur 3C veranschaulicht.

Die Figur 3C zeigt ein eine zu lesende Karte 3 enthaltendes Kartenträgerteil 2 in einem Zustand, in welchem sich dieses in der verrasteten Endstellung innerhalb des Kontaktträgerteils 1 befindet. In der Endstellung des Kartenträgerteils 2 nimmt die von dieser aufgenommene Karte 3 zugleich deren Lesestellung ein, in welcher sie, genauer gesagt deren Kontaktflächen durch die Kontaktfedern 12 bestimmungsgemäß kontaktierbar sind. In dem in der Figur 3C gezeigten Zustand sind die Kontaktflächen der Karte 3 auch gerade durch die Kontaktfedern 12 kontaktiert. Die Kontaktfedern 12 befinden sich dabei in ihrer Kontaktstellung, welche zwischen der in der Figur 3A gezeigten Nicht-Kontaktstellung und der in der Figur 3B gezeigten Ausgangsstellung befindet.

Zum Entfernen der Karte 3 aus der in der Figur 3C gezeigten Stellung bedarf es im betrachteten Beispiel der Betätigung des im Entriegelungsabschnitt 21 des Kartenträgerteils 2 enthaltenen Entriegelungsmechanismus. Durch die Betätigung des Entriegelungsmechanismus gelangen das Kontaktträgerteil 1 und das Kartenträgerteil 2 aus der gegenseitigen Verrastung, so daß das Kartenträgerteil 2 aus dem Kontaktträgerteil herausgezogen werden kann. Beim Herausziehen laufen wiederum die Erhebungen 227 und 228 des Kartenträgerteils 2 über die Erhebungen 132 und 133 des Kontaktträgerteils 1 hinweg und drücken dadurch die Kontaktfedern 12 durch die Platte 13 aus der Kontaktstellung zur davon entfernten Nicht-Kontaktstellung weg. Das die Karte 3 enthaltende Kartenträgerteil 2 kann dadurch aus dem Kontaktträgerteil 1 herausgezogen werden, ohne daß die Kontaktfedern an der Oberfläche der Karte entlanggleiten.

Nicht nur das Einbringen der zu lesenden Karte in deren Lesestellung, sondern auch das Entfernen der Karte aus der Lesestellung kann daher unter bestmöglicher Schonung der Kontaktfedern 12 bewerkstelligt werden.

Von den Erhebungen 132, 133, 227 und 228 sind die Erhebungen 132 und 133 einerseits, und die Erhebungen 227 und 228 andererseits (in Bewegungsrichtung beim Ineinanderschieben bzw. Auseinanderziehen gesehen) unterschiedlich lang ausgebildet; genauer gesagt sind die Erhebungen 132 länger als die Erhebungen 133, und die Erhebungen 227 sind kürzer als die Erhebungen 228. Anders ausgedrückt sind jeweils diejenigen Erhebungen, die beim Ineinanderschieben von Kontaktträgerteil 1 und Kartenträgerteil 2 als erste aufeinandertreffen, die jeweils längsten Erhebungen, und die den jeweils längsten Erhebungen nachfolgenden (benachbarten) Erhebungen werden zunehmend kürzer. Bei den Freiräumen, deren Größen (Längen) im übrigen jeweils an die Größen (Längen) der Erhebungen angepaßt sind, welche in diesen bestimmungsgemäß zu liegen kommen sollen, verhält es sich gerade umgekehrt. Über Freiräume, die zu klein (zu kurz) sind, um eine Erhebung in sich aufzunehmen, gleitet die betreffende Erhebung im wesentlichen unbeeinflußt hinweg.

Gestaltet man die Anordnung und Verteilung der Erhebungen und Freiräume wie im betrachteten Beispiel derart, daß die von den jeweiligen Erhebungen passierten Freiräume außer in der Endstellung des Kartenträgerteils 2 innerhalb des Kontaktträgerteils 1 jeweils zu klein sind, um die daran vorbeilaufende Erhebung aufzunehmen, so kann dadurch erreicht werden, daß die Platte 13 jeweils unter großflächiger und örtlich weit verteilter Berührung der jeweiligen Erhebungen gleichmäßig, d.h. ohne ein Verkanten wegdrückbar ist.

Damit ist gewährleistet, daß die Platte 13 die ihr zugedachte Funktion, nämlich das Wegdrücken der Kontaktfedern 12 während des Einbringens der Karte in die Lesestellung und beim Entfernen derselben aus der Kartenlesevorrichtung stets bestimmungsgemäß erfüllen kann.

Es wurde damit eine Kartenlesevorrichtung geschaffen, durch welche das Lesen von Karten dauerhaft, d.h. weitestgehend unabhängig von der Nutzungsdauer der zu lesenden Karte und der Kartenlesevorrichtung zuverlässig fehlerfrei durchführbar ist.

## Patentansprüche

1. Kartenlesevorrichtung mit Kontaktelementen (12) zum Kontaktieren von insbesondere auf einer einen Chip enthaltenden Karte (3) vorgesehenen Kontaktflächen,
**dadurch gekennzeichnet**,
daß ein Kontaktelementestellungsveränderungselement (13) vorgesehen ist, welches derart angeordnet und ausgebildet ist,
daß durch dieses während des Einbringens der jeweils zu lesenden Karte in deren Lesestellung und/oder während des Entfernens der Karte aus deren Lesestellung die Kontaktelemente aus einer zur Kontaktierung der Karte geeigneten Stellung in eine davon entfernte, zur Kontaktierung der Karte ungeeignete Nicht-Kontaktstellung bewegbar sind.

2. Kartenlesevorrichtung nach Anspruch 1,
**dadurch gekennzeichnet**,
daß das Kontaktelementestellungsveränderungselement eine Teile der Kontaktelemente (12) bedeckende bewegliche Platte (13) ist.

3. Kartenlesevorrichtung nach Anspruch 2,
**dadurch gekennzeichnet**,
daß die Platte (13) Aussparungen (131) aufweist, durch welche die zur Kontaktierung der zu lesenden Karte (3) vorgesehenen Abschnitte (122) der Kontaktelemente (12) hindurchragen.

4. Kartenlesevorrichtung nach Anspruch 2 oder 3,
**dadurch gekennzeichnet**,
daß die Platte (13) Erhebungen (132, 133) aufweist, welche derart ausgebildet und angeordnet sind, daß einhergehend mit dem Einbringen der zu lesenden Karte (3) in deren Lesestellung und/oder dem Entfernen der Karte aus deren Lesestellung eine Kraft auf diese ausübbar ist, welche ein Versetzen der Platte bewirkt.

5. Kartenlesevorrichtung nach Anspruch 4,
**dadurch gekennzeichnet**,
daß die Erhebungen (132, 133) derart ausgebildet und angeordnet sind, daß sie in den Weg ragen, längs welchem die zu lesende Karte (3) bewegt werden muß, um in deren Lesestellung eingebracht oder aus dieser entfernt zu werden.

6. Kartenlesevorrichtung nach Anspruch 4 oder 5,
**dadurch gekennzeichnet**,
daß die Erhebungen (132, 133) derart ausgebildet und angeordnet sind, daß andere Erhebungen (227, 228), die auf der zu lesenden Karte (3) und/oder auf einem die zu lesende Karte in sich aufnehmenden Kartenträgerteil (2) vorgesehen sind, auf die Erhebungen der Platte (13) unter Wegdrücken derselben auflaufen und unter Halten der Platte im weggedrückten Zustand über diese hinweglaufen können.

7. Kartenlesevorrichtung nach einem der Ansprüche 4 bis 6,
**dadurch gekennzeichnet**,
daß zwei einander gegenüberliegende Reihen von Erhebungen (132, 133) vorgesehen sind, wobei jeder der Reihen mehrere hintereinander angeordnete Erhebungen mit unterschiedlichen Längen umfaßt.

8. Kartenlesevorrichtung nach einem der Ansprüche 4 bis 7,
**dadurch gekennzeichnet**,
daß zwischen den Erhebungen (132, 133) und/oder vor und/oder hinter den Erhebungen unterschiedlich lange Freiräume vorgesehen sind, in welchen die anderen Erhebungen (227, 228) aufnehmbar sind, welche auf der zu lesenden Karte (3) selbst und/oder auf einem die zu lesende Karte in sich aufnehmenden Kartenträgerteil (2) vorgesehen sind.

9. Kartenlesevorrichtung nach einem der Ansprüche 2 bis 8,
**dadurch gekennzeichnet**,
daß die Platte (13) derart über den Kontaktelementen (12) angeordnet ist, daß die Kontaktelemente beim Versetzen der Platte von dieser mitgenommen werden.
